# EUROPÄISCHE PATENTSCHRIFT

(11) **EP 2 204 891 B1**
(45) Veröffentlichungstag und Bekanntmachung des Hinweises auf die Patenterteilung: **07.08.2019**
(21) Anmeldenummer: 09175074.5
(22) Anmeldetag: 05.11.2009
(51) Int. Cl.: E05F 15/40, H02H 7/085, H02H 1/04

(54) **Stellantrieb eines Kfz-Bauteils und Verfahren zum Betreiben eines solchen Stellantriebs**
Actuating drive of a motor vehicle component and method for operating such an actuating drive
Mécanisme de commande d'un composant de véhicule automobile et procédé de fonctionnement d'un tel mécanisme de commande

(30) Priorität: 05.01.2009 DE 102009000021
(43) Veröffentlichungstag der Anmeldung: 07.07.2010
(73) Patentinhaber: Robert Bosch GmbH, 70442 Stuttgart (DE)
(72) Erfinder: Frey, Heiko, 71254 Ditzingen (DE)

(56) Entgegenhaltungen:
- EP-A1- 1 916 580
- DE-A1- 3 433 204
- DE-A1- 4 020 351
- DE-A1- 10 149 578

## Beschreibung

Die Erfindung betrifft einen Stellantrieb für das Verstellen eines Kfz-Bauteils, vorzugsweise eines Seitenfensters, eines Schiebedachs oder dergleichen, mit einer einen Einklemmschutz bewirkenden Einrichtung.

Die Erfindung betrifft ferner ein auf den Betrieb eines solchen Stellantriebs gerichtetes Verfahren.

### Stand der Technik

Aus Gründen der Betriebssicherheit müssen Stellantriebe, insbesondere solche in Kraftfahrzeugen, die von Passagieren des Kraftfahrzeugs während der Verstellung berührt oder durchgriffen werden können, mit einem Einklemmschutz ausgestattet sein. Dies gilt insbesondere dann, wenn Personen durch sie eingeklemmt werden können, wie beispielsweise bei Fensterhebern oder Schiebedachantrieben von Kraftfahrzeugen. Ein solcher Einklemmfall, der zum Anhalten oder Reversieren des Stellantriebs führt, wird im Stand der Technik durch eine unerwartete Geschwindigkeitsverlangsamung und/oder einen Anstieg des für den Antrieb erforderlichen Stromes eines den Antrieb bewirkenden Elektromotors erkannt. Die Funktionsweise solcher im Stand der Technik bekannter Prüfverfahren auf Vorliegen eines Einklemmfalls ist unter ungünstigen Umständen unzuverlässig, weil Fremdeinflüsse auf die Verstellung und/oder auf die Sensierung nur unzureichend erkannt werden können, also solche, die nicht auf ein Einklemmen zurückzuführen sind, sondern auf äußere Einflüsse. Solche Einflüsse, die fälschlich zu einer Annahme eines Einklemmfalls führen können, sind beispielsweise von dem Fahrzeug überfahrene Schlaglöcher oder Bahnübergänge, wobei durch die entsprechende Beschleunigung des zu verstellenden Fahrzeugsteils im Wesentlichen quer zur Fahrtrichtung beziehungsweise entgegen seiner Bewegungsrichtung ein kurzzeitig höherer Verstellkraftbedarf vorliegt, so dass unrichtigerweise ein Einklemmen angenommen wird.

Aufgabe der Erfindung ist es, einen gattungsgemäßen Stellantrieb mit Einklemmschutz sowie ein Verfahren zum Betreiben eines solchen Stellantriebs mit einem hierdurch realisierten Einklemmschutz bereitzustellen, das die beschriebene Gefahr fehlerhafter Blockierung und Reversierung des Stellantriebs minimiert.

Mit der DE 40 20 351 A1 ist ein elektronisches Verfahren zur Überwachung eines Schließvorgangs von Fensterhebern und Schiebedächern bekannt geworden, bei dem zusätzlich zu den ursächlich mit dem Verstellaggregat zusammenhängenden Verstellparametern ein Sensorsignal eines am Fahrzeug installierten Beschleunigungssenors ausgewertet wird, der verschiedene auf die Karosserie einwirkende Beschleunigungskräfte erfasst.

Die EP 1 916 580 A1 zeigt einen Stellantrieb eines beweglichen Kfz-Bauteils mit einer Einrichtung zur Ermittlung eines Einklemmfalls. Zur Überwachung des Verstellvorgangs wird mittels eines Beschleunigungssensors die Beschleunigung des zu verstellenden Kfz-Bauteils erfasst und ausgewertet.

### Offenbarung der Erfindung

Hierzu wird ein Verfahren zum Betreiben eines Stellantriebs eines Kfz-Bauteils, vorzugsweise eines Seitenfensters, eines Schiebedachs oder dergleichen, vorgeschlagen, mit einem Einklemmschutz. Dabei ist vorgesehen, dass der Einklemmschutz unter Verwendung einer Beschleunigungsmessung realisiert wird. Der Einklemmschutz verwendet demzufolge nicht (oder nicht allein) eine Strommessung eines Antriebsmotors oder eine Positionsmessung des zu bewegenden Kfz-Bauteils, sondern die Ergebnisse einer Beschleunigungsmessung.

Erfindungsgemäß wird die Beschleunigung des Kfz-Bauteils bestimmt. In dieser Variante ist ein Beschleunigungssensor dem Kfz-Bauteil zugeordnet, wobei während der Bewegung des Kfz-Bauteils dessen Beschleunigung gemessen wird. Die Beschleunigung ist bei Beginn der Bewegung des Kfz-Bauteils positiv und geht bei Erreichen der Sollgeschwindigkeit gegen Null.

Bei linearer Bewegung bleibt die Beschleunigung Null, wohingegen sie bei einem Einklemmen negativ wird. Hierbei ist es sinnvoll, die geometrische Bahn des Verstellweges des Kfz-Bauteils zu kennen und durch geeignete Algorithmen zu berücksichtigen, da beispielsweise bei Fensterhebern die Scheibenkrümmung, je nach Anordnung des Beschleunigungssensors, zu unterschiedlichen Beschleunigungswerten, bezogen auf die für den Verstellweg benötigte Zeit, führen kann. Ob tatsächlich ein Einklemmfall vorliegt, wird mit Hilfe von Algorithmen berechnet, die die Beschleunigungsmessung und ihre Ergebnisse auswerten, insbesondere über die Zeit integrieren.

Erfindungsgemäß wird die Beschleunigung des Kraftfahrzeugs bestimmt. Die Beschleunigung des Kraftfahrzeugs in anderer Richtung als in der beabsichtigten Bewegungsrichtung (Fahrtrichtung) des Kraftfahrzeugs verursacht Störeinflüsse auf die Messung der Bewegung des Kfz-Bauteils, gleichgültig, nach welchem Verfahren diese vorgenommen wird. Durch die Masseträgheit des zu bewegenden Kfz-Bauteils nämlich wirken sich Beschleunigungen in anderer Richtung als der Bewegungsrichtung des Fahrzeugs (und in ungünstigen Fällen sogar solche in Bewegungsrichtung des Fahrzeugs) auf die Bewegung des Kfz-Bauteils aus, dergestalt, dass beispielsweise bei dem Überfahren von Schlaglöchern oder Bahnübergängen ein positiver Beschleunigungswert beispielsweise einer anzuhebenden Seitenscheibe und nachfolgend eine negative Beschleunigung erfolgt. Dies wird von im Stand der Technik bekannten Systemen und Verfahren zum Einklemmschutz als Negativbeschleunigung des Kfz-Bauteils (beispielsweise Seitenscheibe) erfasst und fälschlich als Einklemmfall bewertet, so dass ein Abschalten beziehungsweise Reversieren des Kfz-Bauteils erfolgt, ohne dass tatsächlich ein Einklemmfall vorgelegen hätte. Durch Berücksichtigung der entsprechenden Beschleunigung des Kraftfahrzeugs als solchem ist es möglich, eine derartige, auf das gesamte Fahrzeug wirkende Störgröße gewissermaßen auszufiltern.

In einer nicht erfindungsgemäßen Verfahrensausbildung wird der Stellantrieb von einem elektrischen Antrieb bewirkt, dessen Stromaufnahme zur Ermittlung des Zustandes des Kfz-Bauteils bestimmt wird. Bei Abbremsen der Bewegung des Kfz-Bauteils (und damit in der Verbringung in einen abgebremsten Zustand) beispielsweise durch Einklemmen und damit Herbeiführen einer Einklemmsituation, die vermieden werden soll, steigt die Stromaufnahme des elektrischen Antriebs plötzlich deutlich an. Hierbei wird, insbesondere in Verbindung mit einem vorstehend beschriebenen Beschleunigungssensor, die Bewegung des Kfz-Bauteils überwacht und aus einem plötzlichen starken Ansteigen der Stromaufnahme des elektrischen Antriebs das Blockieren oder Behindertwerden des Kfz-Bauteils gefolgert, wobei ergänzend Ergebnisse einer Beschleunigungsmessung herangezogen werden, um das Ergebnis der Messung der Stromaufnahme zu plausibilisieren.

In einer nicht erfindungsgemäßen Verfahrensausbildung wird eine Position des Kfz-Bauteils bestimmt, beispielsweise wenn über einen dem Stellantrieb zugeordneten Positionsgeber.

Erfindungsgemäß wird die Bestimmung der Beschleunigung des Kraftfahrzeugs nach dem Wortlaut von Anspruch 1 als Referenz für den Einklemmschutz herangezogen, um Einklemmzustände von Nichteinklemmzuständen zu unterscheiden. Nichteinklemmzustände sind hierbei solche, bei denen ein Einklemmzustand (Einklemmfall) tatsächlich gar nicht vorliegt, sondern vielmehr solche, in denen aufgrund von Beschleunigungen, die außerhalb des Stellantriebs auf das Kfz-Bauteil einwirken, also beispielsweise über die Karosserie des Kraftfahrzeugs, wenn dieses beispielsweise eine Schwelle, einen Bahndamm oder ein Schlagloch überfährt. Es findet hierbei gewissermaßen eine Differenzbildung statt zwischen der Beschleunigung des Kraftfahrzeugs, insbesondere in Richtung der Bewegung des Kfz-Bauteils, sowie der Bewegung des Kfz-Bauteils als solchem. Gemäß einer nicht erfindungsgemäßen Variante kann die Bewegung des Stellelements durch Bestimmung der Stromaufnahme des elektrischen Stellantriebs des Kfz-Bauteils, ermittelt werden, indem Werte aus einem in vielen Fahrzeugen beispielsweise schon vorhandenen ESP-Sensor, der üblicherweise über ein ESP-Steuergerät für Fahrstabilität sorgt, verwendet werden. Beschleunigungen des Fahrzeugs, die zu unerwünschten Annahmen von nicht vorhandenen Einklemmzuständen führen könnten, werden nämlich außer durch die Messung der Stromaufnahme des dieser Art negativ beschleunigten Kfz-Bauteils auch vom Beschleunigungssensor etwa des ESP-Steuergeräts erfasst und können somit zur Verifizierung und/oder Falsifizierung des Vorliegens eines Einklemmzustandes herangezogen werden. Wird demzufolge durch Messung der Stromaufnahme des Elektroantriebs des Stellantriebs ein Einklemmzustand angenommen, weil beispielsweise eine Seitenscheibe in ihrem Bewegungsvorgang Richtung "Schließen", durch Überfahren eines kurzen Hindernisses negativ beschleunigt wird, nämlich aufgrund der Masseträgheit und ihres Eigengewichts, so wird dieser Zustand für das gesamte Kraftfahrzeug, in dem dieses Kfz-Bauteil verbaut ist, von dem Beschleunigungssensor, etwa des ESP-Steuergeräts, ebenfalls erkannt und der Einklemmzustand kann auf diese Weise ausgeschlossen werden. Auf diese Weise wird ein unerwünschtes, fälschliches Stoppen oder Reversieren des Stellantriebs vermieden.

Weiter wird erfindungsgemäß ein Stellantrieb vorgeschlagen für das Verstellen eines Kfz-Bauteils, vorzugsweise eines Seitenfensters, eines Schiebedachs oder dergleichen, mit einer einen Einklemmschutz bewirkenden Einrichtung. Dabei ist vorgesehen, dass die Einrichtung einen Beschleunigungssensor aufweist. Mittels des Beschleunigungssensors wird die Beschleunigung sowohl des Kfz-Bauteils als auch des Kraftfahrzeugs gemessen. Durch zwei Beschleunigungssensoren gemäß Anspruch 5 lassen sich Aussagen über die Beschleunigung des Kfz-Bauteils beziehungsweise des Kraftfahrzeugs treffen, wobei diese zueinander in Relation gesetzt werden können, um die Plausibilität eines detektierten Einklemmzustandes zu überprüfen und ein fälschliches Anhalten oder Reversieren des Stellantriebs zu vermeiden, insbesondere dann, wenn das Fahrzeug insgesamt eine Negativbeschleunigung erfährt, wobei beispielsweise durch Masseträgheit ein Seitenfenster in der Bewegung abgebremst wird (sich also in Richtung "offen" statt in der gewünschten Bewegungsrichtung "geschlossen" bewegt oder in der Bewegungsrichtung zum Schließungszustand abgebremst wird).

Erfindungsgemäß ist ein erster Beschleunigungssensor am Kfz-Bauteil befestigt. Dies erlaubt eine direkte Messung der Beschleunigung des Kfz-Bauteils, wobei diese bei linearer Bewegung Null und im Abbremsungszustand (beispielsweise im Einklemmfall) negativ ist.

Erfindungsgemäß ist ein zweiter Beschleunigungssensor im Steuergerätgehäuse des Stellantriebs angeordnet; hier misst er die Beschleunigung des Kraftfahrzeugs, insbesondere die Beschleunigung nicht in der jeweils derzeit vorherrschenden Fahrtrichtung, sondern bevorzugt beispielsweise in Hoch-/Tief-Richtung.

In einer weiteren Ausführungsform ermittelt die Einrichtung eine Stromaufnahme eines elektrischen Antriebs des Stellantriebs. In dieser konventionellen, aus dem Stand der Technik bereits bekannten Ausführungsform der Erkennung von Einklemmzuständen wird, wie bereits beschrieben, mittels der Stromaufnahme eines elektrischen Antriebs, die sich im Einklemm- beziehungsweise Blockierfall deutlich erhöht, der Einklemmzustand detektiert; insbesondere in Verbindung mit den genannten Beschleunigungssensoren und Hinzuziehung einer Beschleunigungsmessung lässt sich ein so detektierter Einklemmzustand verifizieren oder falsifizieren, indem von außen wirkende Einflüsse auf das Gesamtfahrzeug, beispielsweise das Überfahren von Querrillen, ausgeschlossen werden können.

In einer anderen Ausführungsform ermittelt die Einrichtung eine Position des Kfz-Bauteils und/oder des Stellantriebs. Dies kann beispielsweise dadurch erfolgen, dass dem Stellantrieb, der mit dem Kfz-Bauteil verbunden ist, ein Positionsgeber zugeordnet ist. Dies wird registriert über eine Wegstreckenermittlung, ausgehend von einem Referenzpunkt für eine Geschlossenstellung und/oder eine Offenstellung, die derzeitige Position des Kfz-Bauteils und/oder, abgetragen über die Zeit, eine Positionsänderung des Kfz-Bauteils.

Erfindungsgemäß wird ein Stellantrieb vorgeschlagen, bei dem der Beschleunigungssensor im Stellantrieb angeordnet ist. Der Stellantrieb ist mit dem Kraftfahrzeug fest verbunden insbesondere mit einer Türe oder einem anderen Bauteil des Kraftfahrzeugs verschraubt oder vernietet. Der dort, in diesem Stellantrieb, angeordnete Beschleunigungsmesser erfasst demzufolge Beschleunigungen des gesamten Kraftfahrzeugs, die zu dem, von dem am Kfz-Bauteil angeordneten Beschleunigungsmesser erfassten Einklemmfall in Bezug gesetzt werden, diesen also verifizieren oder falsifizieren können. Dies erfolgt dadurch, dass Werte dieses im Stellantrieb angeordneten Beschleunigungssensors, die eine entsprechende Beschleunigung quer zur Fahrtrichtung des Fahrzeugs widerspiegeln, auf eine Erschütterung des gesamten Fahrzeug schließen lassen, nicht auf eine Beschleunigungsänderung des Kfz-Bauteils allein, wie dies in einer Einklemmsituation der Fall wäre. Der im Stellantrieb angeordnete Beschleunigungssensor dient daher zur Erfassung von Beschleunigungen des gesamten Kraftfahrzeugs zum Ausschluss eines Einklemmfalles.

Weitere vorteilhafte Ausführungsformen ergeben sich aus den Unteransprüchen und aus Kombinationen derselben.

Die Erfindung wird nachfolgend anhand von Beispielen näher erläutert, ohne aber hierauf beschränkt zu sein.

Es zeigen
- Figur 1: einen Stellantrieb eines Kraftfahrzeugs für das Verstellen eines Kfz-Bauteils, nämlich eines Seitenfensters, mit einer Ermittlung der Stromaufnahme eines elektrischen Antriebs des Stellelements und einem Beschleunigungssensor, der dem Kraftfahrzeug zugeordnet ist;
- Figur 2: einen solchen Stellantrieb, bei dem ein Beschleunigungssensor dem Kfz-Bauteil, nämlich einem Seitenfenster, zugeordnet ist und
- Figur 3: einen solchen Stellantrieb, in dem jeweils ein Beschleunigungssensor sowohl dem Kfz-Bauteil, nämlich einem Seitenfenster, als auch dem Kraftfahrzeug zugeordnet ist.

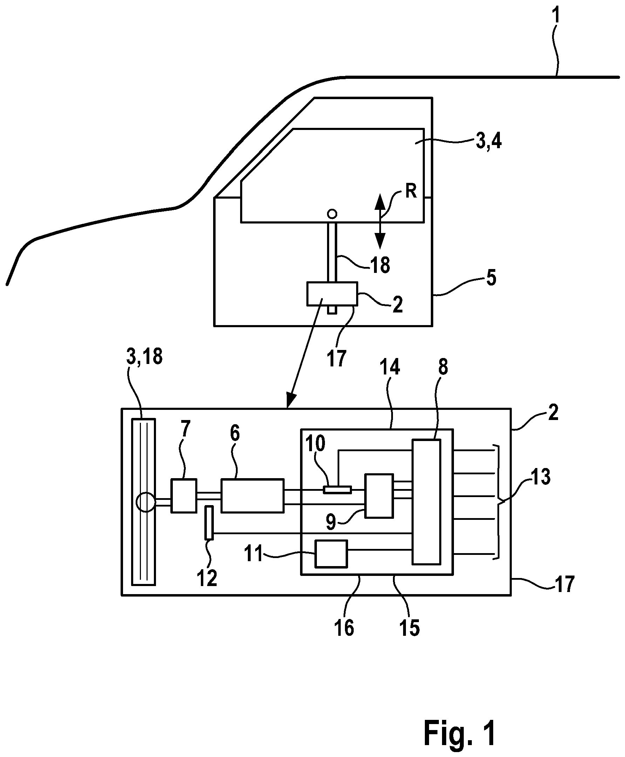

Figur 1 zeigt an einem Kraftfahrzeug 1 einen Stellantrieb 2 für ein Kfz-Bauteil 3, nämlich ein Seitenfenster 4. Mittels des Stellantriebs 2 lässt sich das Seitenfenster 4 über eine mit diesem verbundene Schubstange 18 öffnen oder schließen, wie durch Pfeil R dargestellt. Das Seitenfenster 4 ist zusammen mit dem Stellantrieb 2 in einer Fahrzeugtüre 5 des Kraftfahrzeugs 1 angeordnet. Der Stellantrieb 2, in Figur 1 zusätzlich schematisiert vergrößert dargestellt, weist einen elektrischen Antrieb 6 auf, der über ein Getriebe 7 auf das Kfz-Bauteil 3 beziehungsweise die Schubstange 18 wirkt. Der elektrische Antrieb 6 wird hierbei von einem Microcontroller 8 angesteuert, wobei zwischen Microcontroller 8 und elektrischem Antrieb 6 eine Leistungsendstufe 9 sowie ein Stromsensor 10 angeordnet sind. Die Leistungsendstufe 9 bewirkt hierbei die direkte Strombeaufschlagung des elektrischen Antriebs 6 in Abhängigkeit von Vorgaben des Microcontrollers 8, und der Stromsensor 10 misst den über die Leistungsendstufe 9 an den elektrischen Antrieb 6 abgegebenen Strom. Dem elektrischen Antrieb 6 beziehungsweise dem Getriebe 7 ist weiter ein Positionssensor 12 zur Bestimmung von Position und/oder Bewegungsrichtung zugeordnet. Ein Beschleunigungssensor 11 ist einem von elektrischen Anschlüssen 13 mit Spannung und Steuerinformationen versorgten Steuergerät 14 zugeordnet, insbesondere zusammen mit dem Microcontroller 8, der Leistungsendstufe 9 und dem Stromsensor 10 in ein Steuergerätegehäuse 15 als Baueinheit 16 eingehaust. Die Baueinheit 16 ihrerseits ist insgesamt dem Stellantrieb 2 zugeordnet, insbesondere in einem Stellantriebsgehäuse 17 angeordnet. Das Stellantriebsgehäuse 17 beziehungsweise der Stellantrieb 2 ist mit dem Kraftfahrzeug 1 über die Fahrzeugtüre 5 fest verbunden, wobei der Stellantrieb 2, wie durch den Pfeil R dargestellt, das zu bewegende Kfz-Bauteil 3, nämlich das Seitenfenster 4, beweglich hält, beispielsweise über die Schubstange 18, die dem Kfz-Bauteil 3 zugeordnet ist. Der Microcontroller 8 schaltet die Versorgungsspannung für den elektrischen Antrieb 6 über die Leistungsendstufe 9 und ermittelt die Bewegung des Kfz-Bauteils 3 und/oder dessen aktuelle Position über den Positionssensor 12. Ferner wird die mechanische Beschleunigung des mit dem Kraftfahrzeug 1 fest verbundenen Steuergerätegehäuses 15 über den darin fest angeordneten Beschleunigungssensor 11 gemessen. Im Falle einer Geschwindigkeitsänderung des Kfz-Bauteils 3 und/oder einer über den Stromsensor 10 gemessene Strommehraufnahme des elektrischen Antriebs 6 kann über die Werte des Beschleunigungssensors 11 der Microcontroller 8 feststellen, ob die Geschwindigkeitsänderung des Kfz-Bauteils 3 auf ein Abbremsen desselben durch mechanischen Eingriff oder gar von einem Einklemmen herrührt, oder ob dies aufgrund einer unerwünschten Negativbeschleunigung, beispielsweise beim Überfahren einer Querrille durch das Kraftfahrzeug 1, herrührt. Wird nämlich das bewegende Kfz-Bauteil 3 während des Bewegungsvorganges über den Stellantrieb 2 abgebremst, beispielsweise im Einklemmfall, wird der fest mit dem Kraftfahrzeug 1 verbundene Beschleunigungssensor 11 keine Beschleunigung in etwa der Bewegungsrichtung nach Pfeil R feststellen. Findet jedoch eine

Negativbeschleunigung des zu bewegenden Kfz-Bauteils 3 während seiner Bewegung durch den Stellantrieb 2 statt, beispielsweise bei Überfahren einer Querrille durch das Kraftfahrzeug 1, so wird auch der fest mit dem Kraftfahrzeug 1 verbundene Beschleunigungssensor 11 eine Beschleunigung im Wesentlichen in Richtung des Pfeils R feststellen, wobei sich diese als Negativbeschleunigung auf das Kfz-Bauteil 3 während dessen AufwärtsBewegung auswirkt und eine erhöhte Stromaufnahme bewirkt, die vom Stromsensor 10 und/oder über den Positionssensor 12 als Verlangsamung ermittelt wird. Im letztgenannten Fall liegt kein Einklemmzustand vor; der Stellantrieb 2 wird demzufolge in der gewünschten Art und Richtung weiter betrieben und weder angehalten noch reversiert.

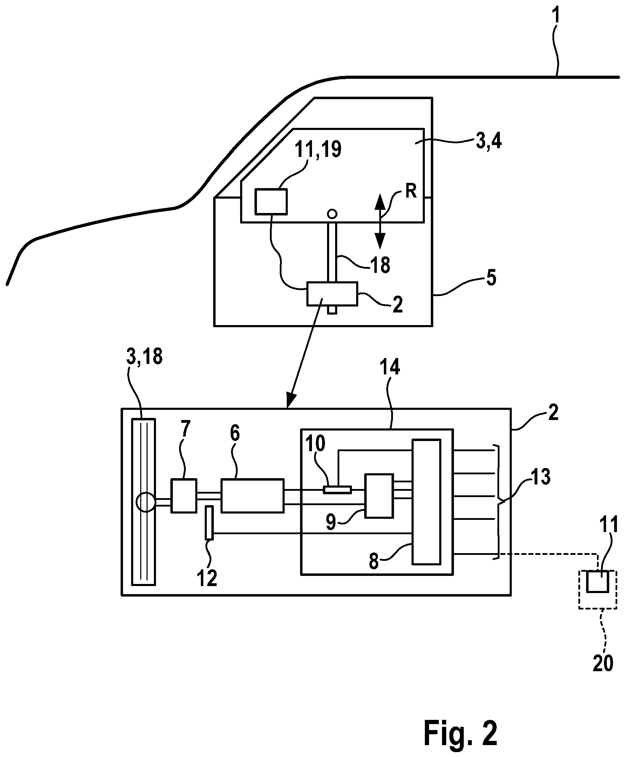

Figur 2 zeigt wiederum das Kraftfahrzeug 1 mit dem Kfz-Bauteil 3, nämlich dem Seitenfenster 4 in der Fahrzeugtüre 5, mit dem zu dessen Bewegung in Richtung des Pfeils R in der Fahrzeugtüre 5 angeordneten Stellantrieb 2 mit der Schubstange 18, die fest mit dem Kfz-Bauteil 3 verbunden ist und von dem Stellantrieb 2 bewegt wird. Der Stellantrieb 2 ist wiederum vergrößert und schematisiert dargestellt. Abweichend zu Figur 1 ist dem Kfz-Bauteil 3, nämlich dem Seitenfenster 4, seinerseits ein Beschleunigungssensor 11 zugeordnet, nämlich ein Bauteilsensor 19. Der Bauteilsensor 19 ist fest mit dem Kfz-Bauteil 3 verbunden und misst dessen Beschleunigung, die auf dieses ausgeübt wird, insbesondere über den Stellantrieb 2 ausgeübt. Hierdurch wird die Bewegungsaufnahme beziehungsweise ein Abbremsen der Bewegung des Kfz-Bauteils 3 erkannt; die Beschleunigung des Kfz-Bauteils 3, wie sie am Bauteilsensor 19 sensiert wird, ist nämlich positiv zu Beginn der Bewegung des Kfz-Bauteils 3, bei Erreichen einer durchgehenden Bewegungsgeschwindigkeit Null, und negativ im Falle einer Abbremsung beziehungsweise eines Einklemmzustandes. Der Stellantrieb 2 dieser Ausführungsform weist wiederum den elektrischen Antrieb 6 auf, der über ein Getriebe 7 das Kfz-Bauteil 3, insbesondere über die Schubstange 18, bewegt, wobei auch hier über einen Positionssensor 12 die aktuelle Position, gegebenenfalls die Bewegungsrichtung (auf, zu) des Kfz-Bauteils 3 und/oder ein Endbereichs-Abschaltezustand erkannt wird. Die Ansteuerung des elektrischen Antriebs 6 erfolgt wiederum über eine Leistungsendstufe 9 mit aufgeschaltetem Stromsensor 10, wobei die Ansteuerung von dem Microcontroller 8 bewirkt wird, der über die elektrischen Anschlüsse 13 mit Spannung und Steuerungssignalen versorgt wird. Der Microcontroller 8 gleicht in dieser Ausführungsform die von dem Bauteilesensor 19 als Beschleunigungssensor 11 gelieferten Beschleunigungsdaten mit Daten des Stromsensors 10 und/oder des Positionssensors 12 ab und plausibilisiert hierdurch einen Einklemmzustand. Ein Einklemmzustand liegt nämlich beispielsweise dann vor, wenn der Beschleunigungssensor 11 als Bauteilesensor 19 eine Negativbeschleunigung des Kfz-Bauteils 3 und gleichzeitig der Positionssensor 12 eine Verlangsamung der Bewegungsgeschwindigkeit des elektrischen Antriebs 6 beziehungsweise des Getriebes 7 beziehungsweise auch der Schubstange 18 registriert, je nach dem, welcher Referenzpunkt für den Betrieb des Positionssensors 12 vorgesehen ist. Gleichzeitig wird in einem solchen Fall der Stromsensor 10 eine erhöhte Stromaufnahme des elektrischen Antriebs 6 feststellen. Liegen alle diese Werte in für einen Einklemmzustand typische Intervallen, wird von einem Einklemmzustand ausgegangen und der Stellantrieb 2 angehalten oder reversiert. Zusätzlich ist es möglich, über die elektrischen Anschlüsse 13 Daten eines außerhalb des Stellantriebs 2 beziehungsweise des Steuergerätes 14 befindlichen Beschleunigungssensors 11 heranzuziehen, um die von dem Bauteilesensor 19 gelieferten Beschleunigungsdaten zu plausibilisieren, beispielsweise von einem solchen Beschleunigungssensor 11, der in einem ESP-Steuergerät 20 des Kraftfahrzeugs 1 ohnehin vorhanden ist das zur Stabilisierung von Fahrsituationen des Kraftfahrzeugs 1 dient; dessen Daten werden demzufolge einer Mehrfachauswertung unter Anderem auch durch den Microcontroller 8 des Stellantriebs 2 beziehungsweise des Steuergeräts 14 des Stellantriebs 2 zugeführt.

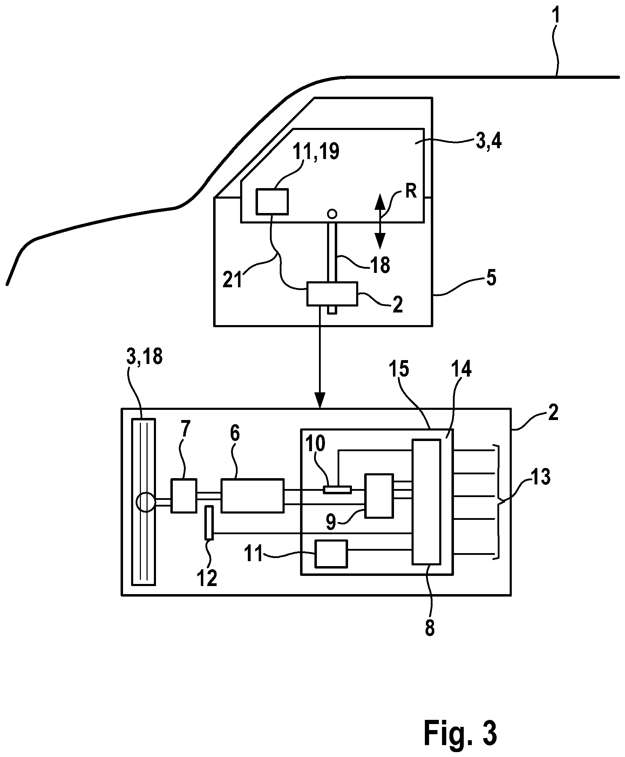

Figur 3 zeigt wiederum abschnittsweise das Kraftfahrzeug 1 mit der Fahrzeugtüre 5, in der der Stellantrieb 2 über die Schubstange 18 mit dem zu bewegenden Kfz-Bauteil 3, nämlich dem Seitenfenster 4, zu dessen Auf- und Abwärtsbewegung in Richtung des Pfeils R angeordnet ist. In dieser Ausführungsform ist dem Kfz-Bauteil 3, nämlich dem Seitenfenster 4, wiederum ein Beschleunigungssensor 11 als Bauteilesensor 19 zur Erfassung der Beschleunigung des Kfz-Bauteils 3 zugeordnet und über eine geeignete elektrische Leitung 21 mit dem Steuergerät 14 verbunden. Das Steuergerät 14 wiederum weist, wie bereits zu Figur 1 beschrieben, den elektrischen Antrieb 6 auf, der über das Getriebe 7 mit dem Kfz-Bauteil 3 beziehungsweise der Schubstange 18 wirkverbunden ist und hierbei von dem Microcontroller 8 über die Leistungsendstufe 9 angesteuert wird, wobei der vom elektrischen Antrieb 6 über die Leistungsendstufe 9 aufgenommene Strom von dem Strommesser 10 erfasst und im Microcontroller 8 ausgewertet wird. Dem Microcontroller 8 ist ferner wiederum, wie in Figur 1 bereits beschrieben, der Beschleunigungssensor 11 zugeordnet, wobei der Microcontroller 8, die Leistungsendstufe 9, der Stromsensor 10 und der Beschleunigungssensor 11 in dem Steuergerätegehäuse 15 zur Ausbildung des Steuergerätes 14 für den Stellantrieb 2 eingehaust und über elektrische Anschlüsse 13 nach außen, beispielsweise an das Bordnetz des Kraftfahrzeugs 1 beziehungsweise an weitere Steuergeräte, Schalter et cetera verbunden sind. Die Bewegung, Bewegungsrichtung und insbesondere die Position des Kfz-Bauteils 3 wird über den beispielsweise zwischen elektrischem Antrieb 6 und Getriebe 7 angeordneten Positionsmesser 12 des Stellantriebs ermittelt, wie bereits zu Figur 1 und Figur 2 beschrieben. In der vorliegenden Ausführungsform wird, wie zu Figur 1 beschrieben, durch den in dem Steuergerätegehäuse 15 des Stellantriebs 2 fest angeordneten Beschleunigungssensor 11 die Beschleunigung des Kraftfahrzeugs 1 gemessen und in Bezug gesetzt zu Beschleunigungswerten, die der Beschleunigungssensor 11 als Bauteilesensor 19 liefert, der an dem Kfz-Bauteil 3, nämlich dem Seitenfenster 4, angeordnet ist und dessen Beschleunigungswerte ausgibt. In einem Einklemmzustand, der verhindert werden soll (nämlich durch Reversieren des Stellantriebs 2) wird der Bauteilsensor 19 eine Negativbeschleunigung des Kfz-Bauteils 3 ausweisen und an den Microcontroller 8 des Steuergeräts 14 übergeben, der Beschleunigungssensor 11 im Steuergerät 14 aber, der mechanisch mit dem Kraftfahrzeug 1 fest verbunden ist, keine entsprechende Negativbeschleunigung aufweisen. Weisen dagegen beide Beschleunigungssensoren 11, nämlich der im Steuergerät 14 angeordnete sowie der als Bauteilsensor 19 auf dem Kfz-Bauteil 3 angeordnete, jeweils eine Negativbeschleunigung auf, so ist davon auszugehen, dass eine mechanische Erschütterung des Kraftfahrzeugs 1 zu dieser Negativbeschleunigung geführt hat, die zu einem Abbremsen des Bewegungsvorganges des Kfz-Bauteils 3 geführt hat, insbesondere nämlich etwa das Überfahren einer Querrille, eines Bahngleises oder eines Schlagloches. Der von dem Bauteilsensor 19 registrierte Zustand ist demzufolge nicht auf einen Einklemmzustand zurückzuführen. Die Negativbeschleunigung beruht in diesem Fall vielmehr auf einer Einwirkung auf das gesamte Kraftfahrzeug 1, wovon eben auch das zu bewegende Kfz-Bauteil 3 betroffen ist.

## Patentansprüche

1. Verfahren zum Verstellen eines Kfz-Bauteils (3), vorzugsweise eines Seitenfensters (4), eines Schiebedachs oder dergleichen, mittels eines Stellantriebs (2) mit einem Einklemmschutz, wobei mittels eines im Steuergerätegehäuse (15) des Stellantriebs (2) fest angeordneten Beschleunigungssensors (11) die Beschleunigung des Kraftfahrzeugs (1) gemessen und, zur Realisierung des Einklemmschutzes, in Bezug gesetzt wird zu Beschleunigungswerten des Kfz-Bauteils (3), welche durch einen am Kfz-Bauteil (3) angeordneten, als Bauteilesensor (19) ausgeführten Beschleunigungssensor gemessen werden.

2. Verfahren nach einem der vorhergehenden Ansprüche, **dadurch gekennzeichnet, dass** das Verstellen des Kfz-Bauteils (3) von einem elektrischen Antrieb (6) bewirkt wird, dessen Stromaufnahme zur Ermittlung des Zustandes des Kfz-Bauteils (3) bestimmt wird.

3. Verfahren nach einem der vorhergehenden Ansprüche, **dadurch gekennzeichnet, dass** eine Position des Kfz-Bauteils (3) bestimmt wird.

4. Verfahren nach einem der vorhergehenden Ansprüche, **dadurch gekennzeichnet, dass** die Bestimmung der Beschleunigung des Kraftfahrzeugs (1) als Referenz für den Einklemmschutz herangezogen wird, um Einklemmzustände von Nichteinklemmzuständen zu unterscheiden.

5. Stellantrieb (2) und ein zu verstellendes Kfz-Bauteil (3), vorzugsweise ein Seitenfenster (4), ein Schiebedach oder dergleichen, wobei das Kfz-Bauteil (3) mittels des Stellantriebs (2) mit einer einen Einklemmschutz bewirkenden Einrichtung verstellbar ist, wobei im Steuergerätegehäuse (15) des Stellantriebs (2) ein Beschleunigungssensor (11) fest angeordnet ist, um die Beschleunigung des Kraftfahrzeugs (1) zu messen, und an dem Kfz-Bauteil (3) ein als Bauteilesensor (19) ausgeführter Beschleunigungssensor angeordnet ist, um Beschleunigungswerte des Kfz-Bauteils (3) zu messen, wobei zur Realisierung des Einklemmschutzes die Beschleunigung des Kraftfahrzeugs (1) in Bezug gesetzt wird zu den Beschleunigungswerten des Kfz-Bauteils (3).

6. Stellantrieb nach einem der vorhergehenden Ansprüche, **dadurch gekennzeichnet, dass** die Einrichtung eine Stromaufnahme eines elektrischen Antriebs (6) des Stellantriebs (2) ermittelt.

7. Stellantrieb nach einem der vorhergehenden Ansprüche, **dadurch gekennzeichnet, dass** die Einrichtung eine Position des Kfz-Bauteils (3) und/oder des Stellantriebs (2) ermittelt.

## Claims

1. Method for moving a motor vehicle component (3), preferably a side window (4), a sunroof or the like, by means of an actuating drive (2) with anti-jamming, wherein the acceleration of the motor vehicle (1) is measured by means of an acceleration sensor (11) fixedly arranged in the control device housing (15) of the actuating drive (2) and, in order to implement the anti-jamming, is correlated with acceleration values of the motor vehicle component (3), said acceleration values being measured by an acceleration sensor arranged on the motor vehicle component (3) and embodied as a component sensor (19).

2. Method according to one of the preceding claims, **characterized in that** the movement of the motor vehicle component (3) is effected by an electric drive (6), the power consumption of which is determined in order to identify the state of the motor vehicle (3).

3. Method according to either of the preceding claims, **characterized in that** a position of the motor vehicle component (3) is determined.

4. Method according to one of the preceding claims, **characterized in that** the determination of the acceleration of the motor vehicle (1) is used as reference for the anti-jamming in order to differentiate jamming states from non-jamming states.

5. Actuating drive (2) and motor vehicle component (3) to be moved, preferably a side window (4), a sunroof or the like, wherein the motor vehicle component (3) can be moved by means of the actuating drive (2) having a device that effects anti-jamming, wherein an acceleration sensor (11) is fixedly arranged in the control device housing (15) of the actuating drive (2) in order to measure the acceleration of the motor vehicle (1), and an acceleration sensor embodied as a component sensor (19) is arranged on the motor vehicle component (3) in order to measure acceleration values of the motor vehicle component (3), wherein, in order to implement the anti-jamming, the acceleration of the motor vehicle (1) is correlated with the acceleration values of the motor vehicle component (3).

6. Actuating drive according to one of the preceding claims, **characterized in that** the device identifies a power consumption of an electric drive (6) of the actuating drive (2).

7. Actuating drive according to one of the preceding claims, **characterized in that** the device identifies a position of the motor vehicle component (3) and/or of the actuating drive (2).

## Revendications

1. Procédé de positionnement d'un élément structural de véhicule automobile (3), de préférence une vitre latérale (4), un toit ouvrant ou similaire, au moyen d'un servomécanisme (2) comprenant une protection anti-pincement, l'accélération du véhicule automobile (1) étant mesurée au moyen d'un capteur d'accélération (11) monté à demeure dans le boîtier de contrôleur (15) du servomécanisme (2) et, en vue de réaliser la protection anti-pincement, étant mise en relation avec des valeurs d'accélération de l'élément structural de véhicule automobile (3), lesquelles sont mesurées par un capteur d'accélération disposé sur l'élément structural de véhicule automobile (3) et réalisé sous la forme d'un capteur d'élément structural (19).

2. Procédé selon l'une des revendications précédentes, **caractérisé en ce que** le positionnement de l'élément structural de véhicule automobile (3) est produit par un mécanisme d'entraînement électrique (6) dont la consommation de courant est déterminée en vue d'identifier l'état de l'élément structural de véhicule automobile (3).

3. Procédé selon l'une des revendications précédentes, **caractérisé en ce qu'**une position de l'élément structural de véhicule automobile (3) est déterminée.

4. Procédé selon l'une des revendications précédentes, **caractérisé en ce que** la détermination de l'accélération du véhicule automobile (1) est utilisée comme référence pour la protection anti-pincement afin de différencier les états de pincement des états sans pincement.

5. Servomécanisme (2) et un élément structural de véhicule automobile (3) à positionner, de préférence une vitre latérale (4), un toit ouvrant ou similaire, l'élément structural de véhicule automobile (3) pouvant être positionné au moyen du servomécanisme (2) avec un dispositif produisant une protection anti-pincement, un capteur d'accélération (11) étant monté à demeure dans le boîtier de contrôleur (15) du servomécanisme (2) en vue de mesurer l'accélération du véhicule automobile (1), et un capteur d'accélération réalisé sous la forme d'un capteur d'élément structural (19) étant disposé sur l'élément structural de véhicule automobile (3) en vue de mesurer des valeurs d'accélération de l'élément structural de véhicule automobile (3), l'accélération du véhicule automobile (1) étant mise en relation avec les valeurs d'accélération de l'élément structural de véhicule automobile (3) en vue de réaliser la protection anti-pincement.

6. Servomécanisme selon l'une des revendications précédentes, **caractérisé en ce que** le dispositif identifie une consommation de courant d'un mécanisme d'entraînement électrique (6) du servomécanisme (2).

7. Servomécanisme selon l'une des revendications précédentes, **caractérisé en ce que** le dispositif identifie une position de l'élément structural de véhicule automobile (3) et/ou du servomécanisme (2).
